# EUROPEAN PATENT SPECIFICATION

(11) **EP 4 434 890 B1**
(45) Date of publication and mention of the grant of the patent: **08.10.2025**
(21) Application number: 24161097.1
(22) Date of filing: 04.03.2024
(51) Int. Cl.: B64D 13/06, B60H 1/32

(54) **DUAL-COMPRESSOR VAPOR CYCLE SYSTEM**
DAMPFKREISLAUFSYSTEM MIT ZWEI VERDICHTERN
SYSTÈME À CYCLE DE VAPEUR À DOUBLE COMPRESSEUR

(30) Priority: 22.03.2023 US 202318188220
(43) Date of publication of application: 25.09.2024
(73) Proprietor: Honeywell International Inc., Charlotte, NC 28202 (US)
(72) Inventor: JUNG, Sung-Han, Charlotte, 28202 (US); NIKBIN, Siamak, Charlotte, 28202 (US); ROBLES, Daniel R., Charlotte, 28202 (US)
(74) Representative: Haseltine Lake Kempner LLP

(56) References cited:
- US-A1- 2003 051 492
- US-A1- 2007 277 537
- US-A1- 2011 174 014
- US-A1- 2018 331 599
- US-A1- 2019 284 965
- US-A1- 2021 221 521

## Description

### TECHNICAL FIELD

The present disclosure relates to systems and techniques for producing conditioned air for a vehicle cabin.

### BACKGROUND

A typical commercial transport aircraft provides conditioned air to a cabin of the aircraft over a variety of flight conditions. To supplement air losses and maintain cabin comfort, the aircraft draws in outside air and conditions the outside air for use in the cabin, such as by pressurizing the air using an air pressurization system (APS) and cooling the air using an environmental control system (ECS). As an example, a typical fresh air flow requirement for an Airbus A320 or a Boeing 737 size aircraft is approximately 1 kg per second. An air cycle ECS may typically flow more than this flow requirement at maximum cooling conditions (e.g., on ground) due to a limit on how cold a refrigeration pack discharge temperature of the air cycle ECS may be but may operate at or near the limit at high altitude to minimize energy demand. On the other hand, a vapor cycle ECS may be designed to only flow this much fresh air, regardless of thermal load, since additional cooling can be provided by recirculation air.

US 2003/051492 A1 discloses a method and a device for air conditioning for an aircraft cabin comprising at least two distinct turbomachines, at least one of which is motorised. When the pressure difference between the cabin and the atmosphere is greater than an upper pressure difference threshold, an economy mode is activated, in which the second turbine stage is supplied exclusively by an air output obtained from the cabin. When the pressure difference is lower than a lower pressure difference threshold, a cold mode is activated, in which the compression stages of the turbomachines are connected in series. The drive speed of at least one motor is adjusted such as to adjust the refrigerating power supplied.

### SUMMARY

In some examples, the disclosure describes a vapor cycle control system (VCCS) that includes multiple compressor systems, each with multiple compressors. The VCCS is configured to cool a thermal load for an aircraft. The multiple compressors may increase operating range and efficiency of the VCCS while offering redundancy. A system controller of the VCCS may be configured to dynamically modulate the operating load of each compressor system to maximize the efficiency of the system and the lifespan of its components.

A vapor cycle cooling system as defined in claim 1 includes: a first compressor system including a first motor, a first motor controller, and a first compressor in series with a second compressor; a second compressor system, in parallel to the first compressor system, the second compressor system including a second motor, a second motor controller, and a third compressor in series with a fourth compressor; a condenser fluidically coupled to the first and second compressor systems; a filter drier, in series with, and fluidically coupled to the condenser; a first expansion device in series with, and fluidically coupled to, a flash heat exchanger, the flash heat exchanger fluidically coupled to a second expansion device, the second expansion device fluidically coupled to a first evaporator, the first evaporator fluidically coupled to the first and second compressor systems; a system controller electrically coupled to the first and second motor controllers; and a motor and motor controller cooling loop fluidically coupled to the filter drier and the first and second motors, wherein the vapor cycle cooling system is configured to cool one or more thermal loads for a vehicle.

A method as defined in claim 10 includes: cooling, by a vapor cycle cooling system, one or more thermal loads for a vehicle, wherein the vapor cycle cooling system includes: a first compressor system including a first motor, a first motor controller, and a first compressor in series with a second compressor; a second compressor system, in parallel to the first compressor system, the second compressor system including a second motor, a second motor controller, and a third compressor in series with a fourth compressor; a condenser fluidically coupled to the first and second compressor systems; a filter drier, in series with, and fluidically coupled to the condenser; a first expansion device in series with, and fluidically coupled to, a flash heat exchanger, the flash heat exchanger fluidically coupled to a second expansion device, the second expansion device fluidically coupled to a first evaporator, the first evaporator fluidically coupled to the first and second compressor systems; a system controller electrically coupled to the first and second motor controllers; and a motor and motor controller cooling loop fluidically coupled to the filter drier and the first and second motors.

The details of one or more examples are set forth in the accompanying drawings and the description below. Other features, objects, and advantages will be apparent from the description and drawings, and from the claims.

### BRIEF DESCRIPTION OF THE FIGURES

The details of one or more examples are set forth in the accompanying drawings and the description below. Other features, objects, and advantages will be apparent from the description and drawings, and from the claims.
FIG. 1 is a diagram illustrating an example system for cooling a thermal load.
FIG. 2 is a diagram illustrating another example system for cooling multiple thermal loads.
FIG. 3 is a diagram illustrating another example system for cooling thermal loads.
FIG. 4 is a block diagram of an example system controller for a vapor cycle cooling system.
FIG. 5 is a flowchart of an example technique for cooling a thermal load of a vehicle.

### DETAILED DESCRIPTION

Systems and methods are disclosed for cooling thermal loads in a vehicle, such as an aircraft using a multi-compressor vapor cycle cooling system (VCCS). It is often desirable for an environmental control system (ECS), including the VCCS, to operate efficiently to conserve fuel and power while occupying as little space as possible. In accordance with examples of this disclosure, a VCCS includes multiple compressor systems, each with multiple stages of compression (e.g., multiple compressors within a single compressor system). In order to increase reliability of the VCCS and provide redundancy, some vehicles may be equipped with multiple compressor systems. In this way, the VCCS of this disclosure provides redundancy for cooling needs of the vehicle while taking up minimal space and allowing for efficient load sharing across compressor systems.

According to principles of the disclosure, a VCCS of a vehicle may be configured to cool a thermal load for the vehicle. For example, the thermal load may include cabin air for cooling the cabin of an aircraft. The VCCS includes a first compressor system and a second compressor system configured to pressurize the refrigerant of the system. The first and second compressor systems are in parallel with one another in the VCCS such that one or both may operate alone or simultaneously. Each compressor system includes two compressors which may include an interstage pipe between the two compressors. The VCCS further includes a condenser, filter drier, one or more expansion devices, a flash heat exchanger, and an evaporator. The flash heat exchanger may be fluidically coupled to the interstage pipes of the compressor systems. In some examples the flash heat exchanger may be a flash sub-cooler or flash tank. A system controller coupled to one or more components of the VCCS may provide instructions for operating parameters of the components. For example, VCCS may be electrically coupled to motor controllers of motors in the compressor systems.

According to instructions from the system controller, the compressor systems may operate at different loads to maximize power efficiency while pressurizing the refrigerant of the system. The condenser is fluidically coupled and in series with the compressor systems such that the refrigerant flows from the compressor systems to the condenser. The VCCS includes a filter drier in series with, and fluidically coupled to, the condenser such that the refrigerant flows from the condenser to the filter drier. A first expansion device is in series with and fluidically coupled to the filter drier such that the refrigerant flows from the filter drier to the first expansion device. A motor cooling loop of the VCCS is also fluidically coupled to the filter drier, such that the refrigerant flows from the filter drier to the motors of the compressor systems. The flash heat exchanger may also be in series with, and fluidically coupled to, the filter drier, such that the refrigerant flows from the filter drier to the flash heat exchanger. The flash heat exchanger is also in series with, and fluidically coupled to, the first expansion device, such that refrigerant flows from the first expansion device to the flash heat exchanger. In some examples, refrigerant may flow from the filter drier to a first inlet of the flash heat exchanger and from the first expansion device to a second inlet of the flash heat exchanger. In some examples, refrigerant only flows from the first expansion device to one inlet of the flash heat exchanger.

The VCCS may include a second expansion device in series with, and fluidically coupled to, the flash heat exchanger, such that refrigerant flows from the flash heat exchanger to the second expansion device. The evaporator may be in series with, and fluidically coupled to, the second expansion device, such that refrigerant flows from the second expansion device to the evaporator. In some examples, a second evaporator fluidically coupled to a third expansion device are in parallel with the first evaporator and second expansion device. The first and second compressor systems may be fluidically coupled to, and in series with, the evaporator(s), such that refrigerant flows from the evaporators to an inlet of a first stage compressor for each compressor system. Each evaporator may be configured to cool a thermal load (e.g., a cabin air line) for a portion of the vehicle.

In some examples, the second compressor system has a different load capacity than the first compressor system. For example, the load capacity of the second compressor system may be in a range of thirty to seventy percent of the load capacity of the first compressor system. The minimum capacity of a compressor system may be limited depending on the type of compressor used in the system. For example, the turn-down ratio of a centrifugal compressor system may be around forty percent. That is, the ratio of the minimum operating capacity to the maximum operating capacity of the system may be around forty percent. By including a second compressor system with a lower maximum load capacity, the VCCS of this disclosure may have an increased operating range. For example, the first compressor system may idle while the second compressor system may operate independently at a minimum operating capacity below the minimum operating capacity of the first compressor system alone.

A compressor system is typically most efficient when operating at a certain percentage of its maximum load capacity (e.g., 80%). When a VCCS has only one compressor system, there may be only one operating load at which the compressor can operate while maintaining maximum efficiency. However, in examples of this disclosure, when a VCCS has multiple compressor systems, there may be multiple operating loads at which maximum efficiency may be maintained.

The system controller of the VCCS may be configured to operate the components of the VCCS such that the VCCS operates at peak efficiency given a desired amount of cooling. For example, the system controller may be configured to receive an indication of a temperature mismatch for the VCCS. That is, the system controller may determine that a current temperature in the vehicle is higher than a temperature setpoint. Based on the temperature mismatch, the system controller may determine a first target operating load for the first compressor system and a second target operating load for the second compressor system so that the VCCS corrects the temperature mismatch. The system controller may output control signals to each motor controller of the compressor systems instructing the motor controllers to operate the respective compressor system at the respective target operating load. In some examples, the VCCS may determine the target operating loads such that the compressor systems operate at their maximum efficiency. In some examples, the system controller may instruct the first compressor system to operate at a different operating load than the second compressor system.

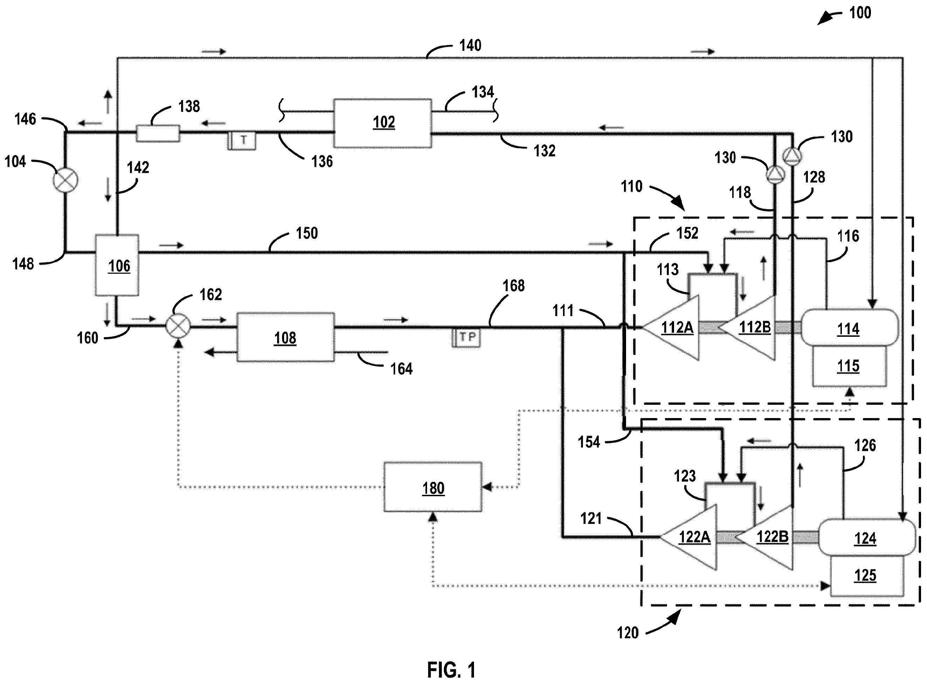

FIG. 1 is a diagram illustrating an example system for cooling a thermal load in an aircraft. The techniques of this disclosure, however, may also be implemented into other types of vehicles. VCCS 100 includes a first compressor system 110, a second compressor system 120 (together, compressor systems 110, 120), a condenser 102, a filter drier 138, one or more expansion devices (e.g., first expansion device 104 and second expansion device 162), a flash heat exchanger 106, an evaporator 108, and a system controller 180. VCCS 100 also includes fluid and electrical connections between the components. For example, VCCS 100 includes fluid connections such as condenser inlet line 132, condenser outlet line 136, motor cooling loop 140, flash exchanger inlet lines 142 and 148, first expansion device line 146, flash return line 150, condenser line 160, return line 168, first interstage return 152, and second interstage return 154. VCCS 100 may also include one or more electrical connections, for example electrical connections between system controller 180 and one or more of the expansion devices and motor controllers of VCCS 100.

VCCS 100 may be configured to cool thermal load 164. For example, thermal load 164 may represent a cabin air supply line filled with air to be cooled to provide cool air to a cabin of an aircraft. The cabin of an aircraft may be configured to house people, cargo, and the like. The cabin may be fluidically coupled to the cabin air supply line. To maintain adequate conditions within the internal environment of the cabin, such as for personal comfort or required by law or industry standard, the environmental control system (ECS) of the aircraft may be configured to control ambient conditions of the cabin. For example, the ECS may be configured to control a pressure, temperature, humidity, air flow rate, or other ambient conditions of the cabin at various aircraft conditions, such as ground operation, passenger loading, take-off, cruising, descent, and landing. VCCS 100 may be a part of the aircraft ECS configured control the temperature of cabin air according to one or more setpoints for ambient conditions of the cabin. For example, VCCS 100 may cool the cabin air supply line to maintain a target range of pressures, temperatures, and/or humidity of the cabin.

The one or more fluid connections of VCCS 100 may be filled with refrigerant that undergoes a vapor cycle as the refrigerant progresses through VCCS 100 in order to cool thermal load 164. For example, first compressor system 110 and second compressor system 120 may be configured to pressurize the refrigerant, causing the refrigerant to travel through VCCS 100. Condenser 102 may be configured to cool the refrigerant as it travels through VCCS 100. Expansion devices 104, 162 may be configured to control a flow rate of the refrigerant through VCCS 100. Flash heat exchanger 106 may be configured to separate vapor refrigerant from liquid refrigerant to increase an efficiency of VCCS 100. Evaporator 108 may be configured to cool thermal load 164, e.g., cool a cabin air line to supply an aircraft cabin with cool air.

In some examples, thermal load 164 may represent an air line to supply any portion of the vehicle with cool air. For example, thermal load 164 may represent an air line to supply the first class portion of the cabin with cool air, the cockpit with cool air, the crew quarters with cold air, or any other portion of the aircraft with cool air. In some examples, thermal load 164 may represent a cooling line that transfers cooling fluid to avionics or other electronics of the aircraft.

Condenser 102 is fluidically coupled and in series with the compressor systems 110, 120 such that the refrigerant flows from first compressor system 110 and/or second compressor system 120 through condenser inlet line 132 to condenser 102. Condenser 102 may be fluidically coupled to cooling source 134 to provide heat transfer from the refrigerant to cooling source 134. Condenser 102 may be configured to receive vapor refrigerant from first compressor system 110 and/or second compressor system 120, condense the vapor refrigerant, and discharge refrigerant to filter drier 138. In some examples, condenser 102 is cooled by environmental air, such as ram air flow.

Filter drier 138 is in series with, and fluidically couple to, condenser 102 such that the refrigerant travels from condenser 102 through condenser outlet line 136 to filter drier 138. Filter drier 138 may be configured to receive refrigerant from condenser 102 and remove particles (e.g., dirt, metal, chips) from the refrigerant, as well as remove moisture from the refrigerant. In the example of FIG. 1, refrigerant may travel from filter drier 138 to: first expansion device 104 through first expansion device line 146; flash heat exchanger 106 through flash exchanger inlet line 142, and one or more motors of first compressor system 110 and/or second compressor system 120 through motor cooling loop 140. Motor cooling loop 140 is fluidically coupled to filter drier 138 and first and second motors 114, 124. Motor cooling loop 140 may be configured to allow refrigerant traveling through motor cooling loop 140 to cool the motors and/or motor components of first compressor system 110 and/or second compressor system 120 (e.g., first motor controller 115 and second motor controller 125). First expansion device 104 may be in series with and fluidically coupled to filter drier 138 such that first expansion device 104 is configured to receive refrigerant from filter drier 138 and meter the amount of refrigerant that passes through expansion device 104 to flash exchanger inlet line 148. For example, first expansion device 104 may be an orifice, tube, or metered valve.

In the example shown in FIG. 1, flash heat exchanger 106 is in series with, and fluidically coupled to, first expansion device 104 by flash exchanger inlet line 148, and filter drier 138 by flash exchanger inlet line 142. Flash heat exchanger 106 may be configured to separate vapor refrigerant from liquid refrigerant. For example, flash heat exchanger may be configured to allow some of the refrigerant flowing into the flash sub-cooler to flash from a liquid to a vapor, and absorb heat from the remaining liquid refrigerant. In some examples, flash heat exchanger 106 may be configured to receive refrigerant from filter drier 138 to a first inlet of flash heat exchanger 106 and from first expansion device 104 to a second inlet of flash heat exchanger 106. In some examples, one of inlet line 142 and inlet line 148 may include an expansion orifice configured to allow at least some of the refrigerant passing through the expansion orifice to flash from a liquid into a vapor. In some examples, flash heat exchanger 106 may be a flash sub-cooler with multiple chambers through which pressurized refrigerant may flow. In some examples, flash heat exchanger 106 may be a flash tank with a single chamber configured to separate vapor refrigerant from liquid refrigerant. Flash heat exchanger 106 may be fluidically coupled to compressor systems 110, 120. For example, flash heat exchanger 106 may be configured to allow vapor refrigerant to travel from flash heat exchanger 106 to first and second compressors systems 110 and 120 through flash return line 150. Flash heat exchanger 106 may be configured to allow liquid refrigerant to travel from flash heat exchanger 106 to second expansion device 162 through condenser line 160.

Second expansion device 162 may be in series with, and fluidically coupled to, flash heat exchanger 106, such that second expansion device 162 is configured to receive refrigerant from flash heat exchanger 106 and control a flow rate of the refrigerant into evaporator 108 to control an amount of cooling of thermal load 164. For example, second expansion device 162 may be an orifice, tube, or metered valve. Second expansion device 162 may be electrically coupled to system controller 180 such that system controller 180 may control second expansion device 162. For example, system controller 180 may send instructions to second expansion device 162 to open or close an orifice to control the flow rate of refrigerant into evaporator 108. Evaporator 108 may be in series with and fluidically coupled to second expansion device. Evaporator 108 may be configured to cool thermal load 164 (e.g., cockpit air for an aircraft) through heat transfer from thermal load 164 to the refrigerant flowing through evaporator 108. For example, refrigerant in evaporator 108 may cool a cockpit air line fluidically coupled to evaporator 108. Compressor systems 110, 120 may be fluidically coupled to, and in series with, evaporator 108. For example, refrigerant may flow through return line 168 to compressor systems 110, 120 to repeat the vapor cycle.

While only one condenser 102, filter drier 138, flash heat exchanger 106, and evaporator 108 are shown, in other examples, one or more condensers, filter driers, flash heat exchangers, and evaporators may be used. Although only two compressor systems (110 and 120) are shown, in other examples, more than two compressor systems may be used. When VCCS 100 includes more than one compressor system, VCCS 100 may include one or more check valves 130 to prevent backflow of refrigerant into one or more of the compressor systems.

Each of first compressor system 110 and second compressor system 120 may include a number of components. While compressor systems 110 and 120 include the same components in the example of FIG. 1, in some examples compressor systems 110 and 120 may be different compressor systems configured to pressurize refrigerant of VCCS 100. First compressor system 110 includes first refrigerant return line 111, first motor 114 with first motor controller 115, first compressor 112A, second compressor 112B, first interstage return line 152, first interstage line 113, first motor cooling loop 116, and first vapor outlet line 118. Second compressor system 120 includes second refrigerant return line 121, second motor 124 with second motor controller 125, third compressor 122A, fourth compressor 122B, second interstage return line 154, second interstage line 123, second motor cooling loop 126, and second vapor outlet line 128. In some examples, the components of first compressor system 110 and second compressor system 120 may be substantially similar.

In order to increase efficiency, compressor systems 110, 120 may have multiple stages of compression. First and third compressors 112A, 122A may compress refrigerant in a first stage of their respective compressor systems, while second and fourth compressors 112B, 122B may compress refrigerant in a second stage of their respective compressor systems. First compressor 112A may be in series with second compressor 112B, and fluidically coupled by first interstage line 113 between first compressor 112A and second compressor 112B. Third compressor 122A may be in series with fourth compressor 122B, and fluidically coupled by second interstage line 123 between third compressor 122A and fourth compressor 122B.

First compressor 112A may be fluidically coupled to evaporator 108 by return line 168 and first refrigerant return line 111. First compressor 112A may be configured to receive refrigerant from first refrigerant return line 111, and partially pressurize the refrigerant into first interstage line 113 in a first stage of compressor system 110. First interstage line 113 may be fluidically coupled to flash heat exchanger 106 by flash return line 150 and first interstage return line 152. First interstage line 113 may be configured to receive refrigerant from first interstage return line 152, first motor cooling loop 116, and first compressor 112A. Second compressor 112B may be configured to receive refrigerant from first interstage line 113, and pressurize the refrigerant into first vapor outlet line 118 in a second stage of compressor system 110. First motor 114 may power first and second compressors 112A, 112B via instructions received from first motor controller 115.

Third compressor 122A may be fluidically coupled to evaporator 108 by return line 168 and second refrigerant return line 121. Third compressor 122A may be configured to receive refrigerant from second refrigerant return line 121, and partially pressurize the refrigerant into second interstage line 123 in a first stage of compressor system 120. Second interstage line 123 may be fluidically coupled to flash heat exchanger 106 by flash return line 150 and second interstage return line 154. Second interstage line 123 may be configured to receive refrigerant from second interstage return line 154, second motor cooling loop 126, and third compressor 122A. Fourth compressor 122B may be configured to receive refrigerant from second interstage line 123, and pressurize the refrigerant into second vapor outlet line 128 in a second stage of compressor system 120. Second motor 124 may power third and fourth compressors 122A, 122B via instructions received from second motor controller 125.

In some examples, compressor systems 110, 120 may have identical maximum load capacities. For example, each of compressor systems 110, 120 may have a load capacity of fifty kilowatts of cooling. In some examples, second compressor system 120 has a different load capacity than first compressor system 110. For example, the load capacity of second compressor system 120 may be in a range of thirty to seventy percent of the load capacity of first compressor system 110. The minimum capacity of a compressor system may be limited depending on the type of compressor used in the system. For example, the turn-down ratio of a centrifugal compressor system may be around forty percent. That is, the ratio of the minimum operating capacity to the maximum operating capacity of the system may be around forty percent. By including a second compressor system with a lower maximum load capacity, VCCS 100 may have an increased operating range. For example, first compressor system 110 may idle while second compressor system 120 may operate independently at a minimum operating capacity below the minimum operating capacity of first compressor system 110 alone. For example, a single compressor system may only be able to operate at a minimum of forty percent of full capacity, resulting in an operating range of forty percent to one hundred percent capacity for VCCS 100. However, in an example of this disclosure, second compressor system 120 may have a maximum load capacity of sixty percent of first compressor system 110, resulting in an operating range of fifteen to one hundred percent capacity for VCCS 100. Other examples are contemplated where second compressor system 120 has a maximum load capacity of any fraction of the maximum load capacity of first compressor system 110 (e.g., second compressor system 120 may have a max load capacity of 10%-90% the max load capacity of first compressor system 110).

A compressor system is typically most efficient when operating at a certain percentage of its maximum load capacity (e.g., 80%). When a cooling system has only one compressor system, there may be only one operating load at which the compressor can operate while maintaining maximum efficiency (e.g., 80% of the maximum load capacity of the single compressor system). However, in examples of this disclosure, when VCCS 100 has multiple compressor systems (e.g., compressor systems 110, 120), there may be multiple operating loads at which maximum efficiency may be maintained.

In some examples, first and second compressor systems 110, 120 may have the same maximum load capacity and may have two operating loads at which maximum efficiency may be maintained. For example, a highest efficiency may be achieved when a compressor system of compressor systems 110, 120 operates at 80% of its maximum load capacity. In this example, VCCS 100 may operate at a highest efficiency when both compressor systems of compressor systems 110, 120 are operating, and both operate at 80% of their maximum load capacity (e.g., when each compressor system operates at 80% of its own max load capacity, VCCS 100 operates at 80% of the max load capacity of VCCS 100). In this example, VCCS 100 may also operate at a highest efficiency when only one compressor system of compressor systems 110, 120 is operating, and operates at 80% of its max load capacity (e.g., when one compressor system idles and the other compressor system operates at 80% of its max load capacity, VCCS 100 operates at 40% of the max load capacity of VCCS 100).

In some examples, compressor systems 110, 120 may have different maximum load capacities and may have three operating loads at which maximum efficiency may be maintained. For example, second compressor system 120 may have a max load capacity of 50% the load capacity of first compressor system 110. In some examples, a highest efficiency may be achieved when a compressor system of compressor systems 110, 120 operates at 80% of its maximum load capacity. In this example, VCCS 100 may operate at a highest efficiency when both compressor systems of compressor systems 110, 120 are operating, and both operate at 80% of their maximum load capacity (e.g., when each compressor system operates at 80% of its own max load capacity, VCCS 100 operates at 80% of the max load capacity of VCCS 100). In this example, VCCS 100 may also operate at a highest efficiency when only first compressor system 110 is operating, and operates at 80% of its max load capacity (e.g., when second compressor system 120 idles, VCCS 100 operates at 53.33% of the max load capacity of VCCS 100). In this example, VCCS 100 may also operate at a highest efficiency when only second compressor system 120 is operating, and operates at 80% of its max load capacity (e.g., when first compressor system 120 idles, VCCS 100 operates at 26.66% of the max load capacity of VCCS 100).

System controller 180 may be configured to monitor and/or operate one or more process control components of VCCS 100. For example, system controller 180 may be communicatively coupled to any or all of first expansion device 104, second expansion device 162, first motor controller 115, and second motor controller 125. System controller 180 may also be communicatively coupled to instrumentation, such as flow meters, temperature sensors, and pressure sensors, and configured to receive measurement signals from the instrumentation. System controller may include any of a wide range of devices, including processors (e.g., one or more microprocessors, one or more application specific integrated circuits (ASICs), one or more field programmable gate arrays (FPGAs), or the like), servers, desktop computers, notebook (i.e., laptop) computers, tablet computers, and the like.

In some examples, system controller 180 may be configured to control first motor controller 115 and second motor controller 125 to generate a particular power from motors 114 and 124. For example, system controller 180 may be configured to receive measurement signals for various parameters of VCCS 100, such as refrigerant flow rate at different locations of VCCS 100, temperature refrigerant at different locations of VCCS 100, pressure of refrigerant at different locations of VCCS 100, etc. System controller 180 may send instruction signals to the one or more components of VCCS 100 to adjust operating parameters of the components to meet cooling demands of VCCS 100.

Cooling demands of VCCS 100 may include maintaining one or more temperature setpoints in the aircraft. System controller 180 may be configured to receive an indication of a temperature mismatch for VCCS 100. For example, the temperature of the cabin air may be outside of a range of setpoints for cabin air temperature stored in memory. System controller 180 may receive the one or more temperature setpoints, as well as a current temperature of the cabin air in the cabin of the aircraft. In some examples, system controller 180 may receive the one or more temperature setpoints from a database in memory of VCCS 100 or system controller 180. In some examples, system controller 180 may receive the one or more temperature setpoints from a control panel in the cabin of the aircraft with which system controller 180 is in communication.

System controller 180 may be configured to receive an indication of a temperature mismatch for VCCS 100. For example, system controller 180 may receive a temperature measurement of cabin air temperature and the one or more setpoints, and determine that the cabin air temperature is not within a range defined by the setpoints. For example, system controller 180 may receive one or more setpoints indicating a desired temperature range of cabin air in the aircraft between 20 degrees Celsius (68 degrees Fahrenheit) and 22.2 degrees Celsius (72 degrees Fahrenheit). System controller 180 may also receive a temperature measurement (e.g., a signal from a temperature sensor or other device in communication with system controller 180 indicative of a temperature) of 23.9 degrees Celsius (75 degrees Fahrenheit). System controller 180 may determine that 23.9 degrees Celsius (75 degrees Fahrenheit) is outside the range of 20-22.2 degrees Celsius (68-72 degrees Fahrenheit) and determine that there is a temperature mismatch. In some examples, system controller 180 may determine the temperature mismatch based on a temperature measurement exceeding a setpoint threshold. In some examples, the temperature mismatch may indicate the temperature of any portion of the aircraft exceeds a range or threshold. For example, the temperature of air in the first class portion of the cabin may exceed a range or threshold. In some examples, the temperature mismatch may indicate that the temperature of one or more electronics of the vehicle exceeds a range or threshold.

System controller 180 may be configured to send control signals to one or more components of VCCS 100 to reduce the mismatch to within the setpoint range or to satisfy a setpoint threshold. For example, system controller 180 may output control signals to one or more of first expansion device 104, second expansion device 162, first motor controller 115, and second motor controller 125.

In some examples, system controller 180 may output control signals to the components of VCCS 100 to operate such that VCCS 100 provides cooling to thermal load 164 proportionally to the degree of mismatch between a temperature and the setpoints corresponding to the temperature reading. For example, system controller 180 may determine a target operating load for VCCS 100 such that the cooling demands of the setpoints are met. In some examples, system controller 180 may determine a larger target operating load of VCCS 100 when the cabin air temperature greatly exceeds a setpoint, and may determine a lower target operating load for VCCS 100 when the cabin air only marginally exceeds a setpoint. For example, system controller 180 may instruct the components of VCCS 100 to provide a large amount of cooling (e.g., operate at a high percentage of the max load capacities of compressor systems 110, 120) when the cabin air temperature is significantly higher than the setpoint temperature. For example, system controller 180 may output control signals to motor controllers 115, 125 to operate at 80% of the load capacity of compressor systems 110, 120, and system controller 180 may output control signals to expansion devices 104, 162 to operate consistent with the operating capacity of compressor systems 110, 120 to control refrigerant flow to different parts of VCCS 100. In some examples, system controller 180 may instruct the components of VCCS 100 to provide a small amount of cooling (e.g., operate at low percentage of the max load capacities of compressor systems 120, 120) when the cabin air temperature is marginally higher than the setpoint temperature. For example, system controller 180 may output control signals to motor controllers 115, 125 to operate at 40% of the load capacity of compressor systems 110, 120, and system controller 180 may output control signals to expansion devices 104, 162 to operate consistent with the operating capacity of compressor systems 110, 120 to control refrigerant flow to different parts of VCCS 100.

Relationships between a desired amount of cooling and target operating parameters of VCCS 100 may be stored in reference databases in memory of system controller 180. For example, for a given amount that a current cabin air temperature exceeds a setpoint, reference databases may store instructions for operating parameters of VCCS 100 to return the cabin air temperature to a value within the setpoint range or beneath a setpoint threshold.

To determine the target operating load of VCCS 100, system controller 180 may determine a first target operating load for first compressor system 110 and a second target operating load for second compressor system 120. In some examples, system controller 180 may output control signals to compressor systems 110, 120 to operate at the same target operating loads. In some examples, system controller 180 may output control signals to compressor systems 110, 120 to operate at different operating loads. System controller 180 may output a first control signal to first motor controller 115 instructing first motor controller 115 to operate first compressor system 110 at a first target operating load, and system controller 180 may output a second control signal to second motor controller 125 instructing second motor controller 125 to operate second compressor system 120 at a second target operating load. In some examples, system controller 180 may determine that only one compressor system of compressor systems 110, 120 is needed, and may output a control signal to one of the compressor systems to idle. In some examples, second compressor system 120 has a max load capacity that is a fraction of the max load capacity of first compressor system 110, and the second target operating load may be a fraction of the first target operating load that is lower than the first target operating load.

In order to determine the target operating loads of first and second compressor systems 110, 120, system controller 180 may be configured to determine a combination of target operating loads of compressor systems 110, 120 that allow VCCS 100 to operate at the highest possible efficiency given a desired amount of cooling. System controller 180 may then output control signals to motor controllers 115, 125 to operate their respective compressor systems 110, 120 at the respective target operating loads. As discussed above, a compressor system may operate at the highest efficiency when operating at a certain percentage of the compressor systems max load capacity. System controller 180 may determine the target operating loads of compressor systems 110, 120 such that the target operating loads are as close as possible to the percentage of the maximum load capacity that allow compressor systems 110, 120 to operate at max efficiency.

For example, second compressor system 120 may have a maximum load capacity of 50% of the maximum load capacity of first compressor system 110, the maximum efficiency of compressor systems 110, 120 may be achieved when operating at 80% of their max load capacity, and system controller 180 may determine that a target operating load of VCCS 100 is 80% of the maximum target operating load of VCCS 100. System controller 180 may determine that a first target operating load for first compressor system 110 is 80% of the max load capacity of first compressor system 110, and that a second target operating load for second compressor system 120 is 80% of the max load capacity of second compressor system 120 (rather than, e.g., a first target operating load of 90% of the max load capacity of first compressor system 110 and a second target operating load of 60% of the max load capacity of second compressor system 120, which would still achieve 80% of the load capacity of VCCS 100 but with less efficiency).

In some examples, second compressor system 120 may have a maximum load capacity of 50% of the maximum load capacity of first compressor system 110, the maximum efficiency of compressor systems 110, 120 may be achieved when operating at 80% of their max load capacity, and system controller 180 may determine that a target operating load of VCCS 100 is 26.66% of the maximum target operating load of VCCS 100. System controller 180 may determine that a first target operating load for first compressor system 110 is 0% of the max load capacity of first compressor system 110 (e.g., first compressor system 110 should idle), and that a second target operating load for second compressor system 120 is 80% of the max load capacity of second compressor system 120 (rather than, e.g., a first target operating load of 40% of the max load capacity of first compressor system 110 and a second target operating load of 0% of the max load capacity of second compressor system 120, which would still achieve 26.66% of the load capacity of VCCS 100, but with less efficiency).

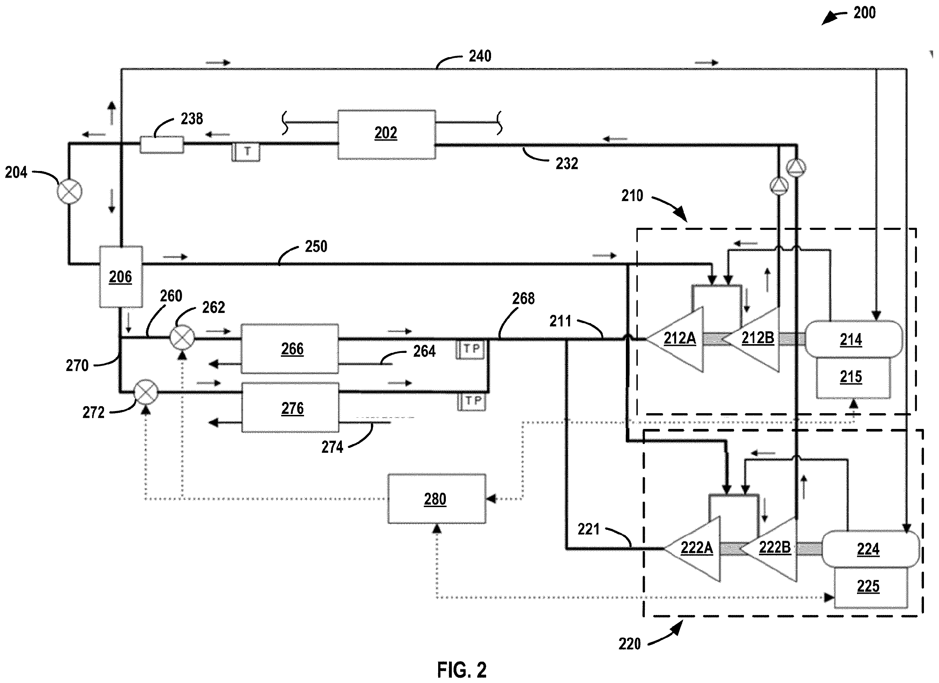

FIG. 2 is a diagram illustrating another example system (VCCS 200) for cooling thermal loads 264 and 274. Components of FIG. 2 may be operably similar to like-named components of FIG. 1. For example, compressor system 210, second compressor system 220, condenser 202, filter drier 238, expansion devices 204, 262, 272, flash heat exchanger 206, evaporators 266, 276, system controller 280, condenser inlet line 232, motor cooling loop 240, flash return line 250, condenser lines 260, 270, thermal loads 264, 274, and return line 268 may be operably similar compressor system 110, second compressor system 120, condenser 102, filter drier 138, expansion devices 104 and 162, flash heat exchanger 106, evaporator 108, system controller 180, condenser inlet line 132, motor cooling loop 140, flash return line 150, condenser line 160, thermal load 164, and return line 168 of FIG. 1. Similarly, compressors 212A, 212B, 222A, 222B, motors 214, 224, motor controllers 215, 225, and refrigerant return lines 211, 221 may be operably similar to compressors 112A, 112B, 122A, 122B, motors 114, 124, motor controllers 115, 125, and refrigerant return lines 111, 121.

In some examples, an aircraft may have multiple different cooling requirements. For example, a cockpit area of the aircraft may have certain temperature setpoints, and a first class portion of the aircraft may have certain different temperature setpoints. In the example shown in FIG. 2, VCCS 200 includes first evaporator 266 configured to cool first thermal load 264, and second evaporator 276 configured to cool second thermal load 274, wherein second evaporator 276 is in parallel with first evaporator 266.

Second expansion device 262 may be in series with, and fluidically coupled to, flash heat exchanger 206, such that second expansion device 262 is configured to receive refrigerant from flash heat exchanger 206 through first condenser line 260. Second expansion device 262 may control a flow rate of the refrigerant into first evaporator 266 to control an amount of cooling of thermal load 264. For example, second expansion device 262 may be an orifice, tube, or metered valve. Second expansion device 262 may be electrically coupled to system controller 280 such that system controller 280 may control second expansion device 262. For example, system controller 280 may send instructions to second expansion device 262 to open or close an orifice to control the flow rate of refrigerant into evaporator 266. Evaporator 266 may be in series with and fluidically coupled to second expansion device 262. Evaporator 266 may be configured to thermal load 264 for an aircraft (e.g., avionics equipment, air for a cockpit of the aircraft, air for a passenger section of the aircraft, etc.) through heat transfer from thermal load 264 to the refrigerant flowing through evaporator 266. For example, refrigerant in evaporator 266 may cool a cabin air line coupled to evaporator 266 that is connected to the cockpit of the aircraft fluidically.

Third expansion device 272 may be in series with, and fluidically coupled to, flash heat exchanger 206, such that third expansion device 272 is configured to receive refrigerant from flash heat exchanger 206 through second condenser line 270. Third expansion device 272 may be in parallel with second expansion device 262. Third expansion device 272 may control a flow rate of the refrigerant into second evaporator 276 to control an amount of cooling of thermal load 274. For example, third expansion device 272 may be an orifice, tube, or metered valve. Third expansion device 272 may be electrically coupled to system controller 280 such that system controller 280 may control third expansion device 272. For example, system controller 280 may send instructions to third expansion device 272 to open or close an orifice to control the flow rate of refrigerant into evaporator 276. Evaporator 276 may be in series with and fluidically coupled to third expansion device 272. Evaporator 276 may be configured to cool thermal load 274 (e.g., cockpit air for an aircraft, , air in a first class portion of the aircraft, avionics equipment) through heat transfer from thermal load 274 to the refrigerant flowing through evaporator 276. For example, refrigerant in evaporator 276 may cool a cabin air line coupled to evaporator 276 that is connected to the first class portion of the aircraft fluidically.

Compressor systems 210, 220 may be fluidically coupled to, and in series with, evaporators 266, 276. For example, refrigerant may flow through return line 268 to compressor systems 110, 120 to repeat the vapor cycle. Evaporators 266, 276 may be fluidically coupled to first compressor 212A of first compressor system 210 by first refrigerant return line 211. Evaporators 266, 276 may be fluidically coupled to third compressor 222A of second compressor system 220 by second refrigerant return line 221.

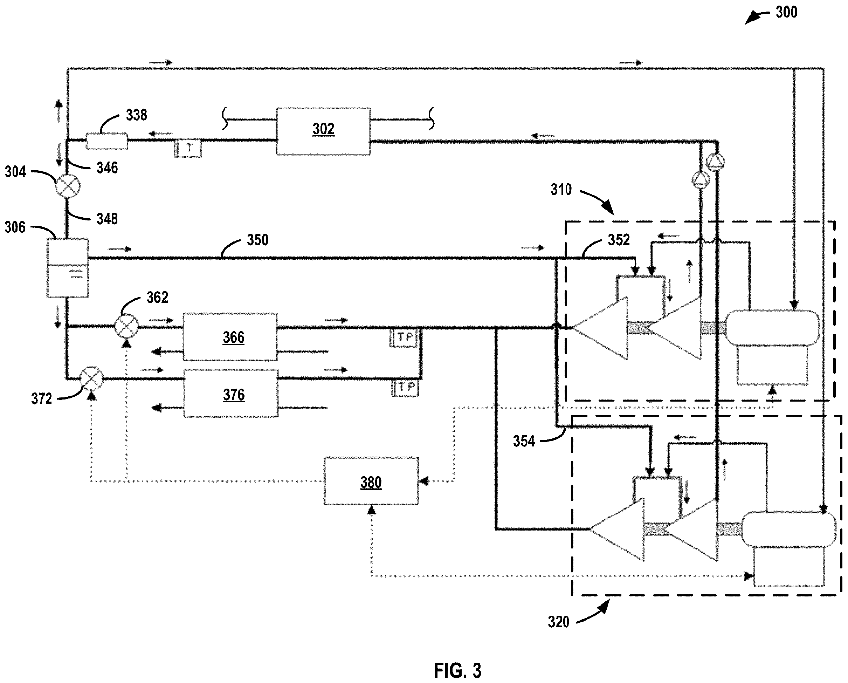

FIG. 3 is a diagram illustrating another example system (VCCS 300) for cooling thermal loads. Components of FIG. 3 may be operably similar to like-named components of FIG. 1 and/or FIG. 2. For example, first compressor system 310, second compressor system 320, condenser 302, filter drier 338, expansion devices 304, 362, 372, evaporators 366, 376, system controller 380, flash return line 350, first interstage return 352, and second interstage return 354 may be operably similar compressor systems 110, 120, condenser 102, filter drier 138, expansion devices 104 and 162, evaporator 108, system controller 180, flash return line 150, first interstage return 352, and second interstage return 354 of FIG. 1.

The VCCS 300 includes flash tank 306. Flash tank 306 operates as a flash heat exchanger. In the example shown in FIG. 3, flash tank 306 is in series with, and fluidically coupled to, first expansion device 304 by flash exchanger inlet line 348. In the example of FIG. 3, flash tank 306 is not fluidically coupled to filter drier 338 by a dedicated line (e.g., as in FIGS. 1 and 2). Instead, first expansion device 304 may be in series with and fluidically coupled to filter drier 238 by first expansion device line 346 such that first expansion device 304 is configured to receive refrigerant from filter drier 338 and meter the amount of refrigerant that passes through expansion device 304 to flash exchanger inlet line 348. Flash tank 306 may be configured to separate vapor refrigerant from liquid refrigerant. For example, flash tank 306 may be configured to allow some of the refrigerant flowing into flash tank 306 to flash from a liquid to a vapor, and absorb heat from the remaining liquid refrigerant. Flash tank 306 may have a single inlet (e.g., flash exchanger inlet line 348). Flash tank 306 may include a single interior chamber configured to separate vapor refrigerant from liquid refrigerant. Flash tank 306 may be fluidically coupled to compressor systems 310, 320. For example, flash tank 306 may be configured to allow vapor refrigerant to travel from flash tank 306 to first and second compressor systems 310 and 320 through flash return line 350, first interstage return 352, and second interstage return 354. Flash tank 306 may be configured to allow liquid refrigerant to travel from flash tank 306 to expansion devices 362, 372.

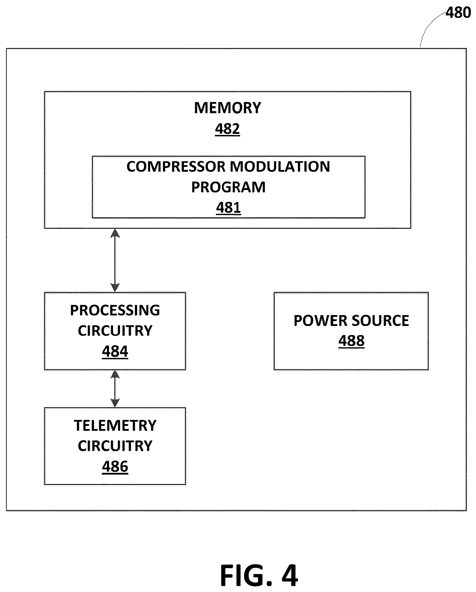

FIG. 4 is a block diagram of an example configuration of a system controller 480 for a vapor cycle cooling system. In the illustrated example, system controller 480 includes processing circuitry 484, memory 482, telemetry circuitry 486, and power source 488. Processing circuitry 484 may be operatively coupled to memory 482, sensing circuitry and sensors (not shown), and telemetry circuitry 486. System controller 480 further includes a power source 488 to provide operational power for processing circuitry 484, memory 482, telemetry circuitry 486, and any other components of system controller 480.

Processing circuitry 484 may include fixed function circuitry and/or programmable processing circuitry. Processing circuitry 484 may include any one or more of a microprocessor, a controller, a digital signal processor (DSP), an application specific integrated circuit (ASIC), a field-programmable gate array (FPGA), or equivalent discrete or analog logic circuitry. In some examples, processing circuitry 484 may include multiple components, such as any combination of one or more microprocessors, one or more controllers, one or more DSPs, one or more ASICs, or one or more FPGAs, as well as other discrete or integrated logic circuitry. The functions attributed to processing circuitry 484 herein may be embodied as software, firmware, hardware or any combination thereof. It may be understood that references to system controller 480 performing a function may refer to processing circuitry 484 performing the function based on instructions stored in memory 482.

System controller 480 may also include sensors and/or sensing circuitry, or be communicatively coupled to instrumentation, such as flow meters, temperature sensors, and pressure sensors, and configured to receive measurement signals from the instrumentation. In some examples, system controller 480 may be in communication (e.g., via telemetry circuitry 486) with another device that includes the sensors/instrumentation and sensor circuitry. System controller 480 may be configured to receive measurement signals for various parameters of a VCCS, such as refrigerant flow rate at different locations of the VCCS, temperature refrigerant at different locations of the VCCS, pressure of refrigerant at different locations of the VCCS, etc. System controller 480 may also be configured to receive measurement signals indicative of temperatures in a vehicle aircraft, (e.g., a cockpit air temperature, a first class cabin air temperature, a temperature of one or more avionics or other electronics of the vehicle).

Telemetry circuitry 486 may include any suitable hardware, firmware, software or any combination thereof for communicating with another device, such as a temperature monitor of an aircraft, another networked computing device, or a sensor. Under the control of processing circuitry 484, telemetry circuitry 486 may receive downlink telemetry from, as well as send uplink telemetry to other computing devices with the aid of an internal or external antenna. Telemetry circuitry 486 may be configured to transmit and/or receive signals via inductive coupling, electromagnetic coupling, Near Field Communication (NFC), Radio Frequency (RF) communication, Bluetooth, WiFi, or other proprietary or non-proprietary wireless communication schemes.

In some examples, memory 482 includes computer-readable instructions that, when executed by processing circuitry 484, cause system controller 480 and processing circuitry 484 to perform various functions attributed to system controller 480 and processing circuitry 484 herein. Memory 482 may include any volatile, non-volatile, magnetic, optical, or electrical media, such as a random-access memory (RAM), read-only memory (ROM), non-volatile RAM (NVRAM), electrically-erasable programmable ROM (EEPROM), ferroelectric RAM (FRAM), dynamic random-access memory (DRAM), flash memory, or any other digital media. Memory 482 may store, as examples, programmed values for one or more operational parameters of system controller 480 (e.g., compressor modulation program 481). Memory 482 may also store data collected by system controller 480 for transmission to another device using telemetry circuitry 486 and/or further analysis by processing circuitry 484.

Memory 482 may store applications and data used by system controller 480, e.g., processing circuitry 484, to perform the techniques described in this disclosure related to cooling a thermal load for an aircraft. For example, memory 482 may include a compressor modulation program 481 including instructions that, when executed on processing circuitry 484, perform the techniques described in this disclosure.

In some examples, processing circuitry 484 of system controller 480 may be configured to monitor and/or operate one or more process control components of a VCCS (e.g., VCCS 100 of FIG. 1). For example, system controller 480 may be communicatively coupled to one or more expansion devices of the VCCS, and one or more motor controllers of the VCCS (e.g., via telemetry circuitry 486 or hard-wired circuitry).

In some examples, processing circuitry 484 may be configured to control a first motor controller and second motor controller to generate a particular amount of power from a first and second motor. For example, processing circuitry 484 may be configured to receive measurement signals for various parameters of the VCCS as described above. Processing circuitry 484 may send instruction signals to the one or more components of the VCCS to adjust operating parameters of the components to meet cooling demands of the VCCS.

Cooling demands of the VCCS may include maintaining one or more temperature setpoints of cabin air in the cabin of an aircraft. Processing circuitry 484 may be configured to receive an indication of a temperature mismatch for the VCCS. For example, the temperature of the cabin air of the aircraft may be outside of a range of setpoints for cabin air temperature stored in memory 482 (e.g., in compressor modulation program 481) or received from another device by processing circuitry 484. Processing circuitry 484 may receive the one or more temperature setpoints, as well as a current temperature of the cabin air in the cabin of the aircraft. In some examples, processing circuitry 484 may receive the one or more temperature setpoints from a database in memory 482 (e.g., from compressor modulation program 481). In some examples, processing circuitry 484 may receive the one or more temperature setpoints from another computing device (e.g., a control panel in the cabin of the aircraft) with which processing circuitry 484 is in communication via telemetry circuitry 486.

Processing circuitry 484 may be configured to receive an indication of a temperature mismatch for the VCCS. For example, processing circuitry 484 may receive a temperature measurement of cabin air temperature and the one or more setpoints, and determine that the cabin air temperature is not within a range defined by the setpoints. For example, processing circuitry 484 may receive one or more setpoints indicating a desired temperature range of cabin air in the aircraft between 20 degrees Celsius (68 degrees Fahrenheit) and 22.2 degrees Celsius (72 degrees Fahrenheit). Processing circuitry 484 may also receive a temperature measurement (e.g., a signal from a temperature sensor or other device in communication with processing circuitry 484 indicative of a temperature) of 23.9 degrees Celsius (75 degrees Fahrenheit). Processing circuitry 484 may determine that 23.9 degrees Celsius (75 degrees Fahrenheit) is outside the range of 20-22.2 degrees Celsius (68-72 degrees Fahrenheit) and determine that there is a temperature mismatch. In some examples, processing circuitry 484 may determine the temperature mismatch based on a temperature measurement exceeding a setpoint threshold.

Processing circuitry 484 may be configured to send control signals to one or more components of the VCCS to reduce the mismatch to within the setpoint range or to satisfy a setpoint threshold. For example, processing circuitry 484 may output control signals to one or more expansion devices and/or motor controllers of VCCS to operate in a manner to reduce the mismatch.

In some examples, processing circuitry 484 may output control signals to the components of the VCCS to operate such that the VCCS provides cooling to cabin air of the aircraft proportionally to the degree of mismatch between the cabin air temperature and the setpoints. For example, processing circuitry 484 may determine a target operating load for the VCCS such that the cooling demands of the setpoints are met. Processing circuitry 484 may determine a larger target operating load of the VCCS when the cabin air temperature greatly exceeds a setpoint, and may determine a lower target operating load for the VCCS when the cabin air only marginally exceeds a setpoint. For example, processing circuitry 484 may instruct the components of the VCCS to provide a large amount of cooling (e.g., operate at a high percentage of the max load capacities of compressor systems of the VCCS) when the cabin air temperature is significantly higher than the setpoint temperature. For example, processing circuitry 484 may output control signals to motor controllers of the compressor systems to operate at 80% of the load capacity of the compressor systems. In some examples, processing circuitry 484 may instruct the components of the VCCS to provide a small amount of cooling (e.g., operate at low percentage of the max load capacities of the compressor systems of the VCCS) when the cabin air temperature is marginally higher than the setpoint temperature. For example, processing circuitry 484 may output control signals to motor controllers of the compressor systems to operate at 40% of the load capacity of the compressor systems.

Relationships between a desired amount of cooling and target operating parameters of the VCCS may be stored in compressor modulation program 481. For example, for a given amount that a current cabin air temperature exceeds a setpoint, compressor modulation program 481 may store instructions for operating parameters of the VCCS to return the cabin air temperature to a value within the setpoint range or beneath a setpoint threshold.

Although described with reference to cabin air of an aircraft, processing circuitry 484 may control temperature measurements, ranges, setpoints, and thresholds for any and all portions of the vehicle. For example, processing circuitry 484 may be configured to receive an indication of a temperature mismatch for avionics or other electronics of the vehicle.

To determine the target operating load of the VCCS, processing circuitry 484 may determine a first target operating load for a first compressor system and a second target operating load for a second compressor system of the VCCS. In some examples, processing circuitry 484 may output control signals to the compressor systems to operate at the same target operating loads. In some examples, processing circuitry 484 may output control signals to the compressor systems to operate at different operating loads. Processing circuitry 484 may output a first control signal to a first motor controller of the first compressor system instructing the first motor controller to operate the first compressor system at a first target operating load, and processing circuitry 484 may output a second control signal to a second motor controller of the second compressor system instructing the second motor controller to operate the second compressor system at a second target operating load. In some examples, processing circuitry 484 may determine that only one compressor system of the compressor systems is needed, and may output a control signal to one of the compressor systems to idle. In some examples, the second compressor system has a max load capacity that is a fraction of the max load capacity of the first compressor system, and the second target operating load may be a fraction of the first target operating load that is lower than the first target operating load.

In order to determine the target operating loads of first and second the compressor systems, processing circuitry 484 may be configured to determine a combination of target operating loads of the compressor systems that allow the VCCS to operate at the highest possible efficiency given a desired amount of cooling. Processing circuitry 484 may then output control signals to the motor controllers to operate their respective the compressor systems at the respective target operating loads. As discussed above, a compressor system may operate at the highest efficiency when operating at a certain percentage of the compressor systems max load capacity. Processing circuitry 484 may determine the target operating loads of the compressor systems such that the target operating loads are as close as possible to the percentage of the maximum load capacity that allow the compressor systems to operate at max efficiency.

For example, the second compressor system may have a maximum load capacity of 50% of the maximum load capacity of the first compressor system, the maximum efficiency of the compressor systems may be achieved when operating at 80% of their max load capacity, and processing circuitry 484 may determine that a target operating load of the VCCS is 80% of the maximum target operating load of the VCCS. Processing circuitry 484 may determine that a first target operating load for the first compressor system is 80% of the max load capacity of the first compressor system, and that a second target operating load for the second compressor system is 80% of the max load capacity of the second compressor system (rather than, e.g., a first target operating load of 90% of the max load capacity of the first compressor system and a second target operating load of 60% of the max load capacity of the second compressor system, which would still achieve 80% of the load capacity of the VCCS but with less efficiency).

In some examples, the second compressor system may have a maximum load capacity of 50% of the maximum load capacity of the first compressor system, the maximum efficiency of the compressor systems may be achieved when operating at 80% of their max load capacity, and processing circuitry 484 may determine that a target operating load of the VCCS is 26.66% of the maximum target operating load of the VCCS. Processing circuitry 484 may determine that a first target operating load for the first compressor system is 0% of the max load capacity of the first compressor system (e.g., the first compressor system should idle), and that a second target operating load for the second compressor system is 80% of the max load capacity of the second compressor system (rather than, e.g., a first target operating load of 40% of the max load capacity of the first compressor system and a second target operating load of 0% of the max load capacity of the second compressor system, which would still achieve 26.66% of the load capacity of the VCCS, but with less efficiency).

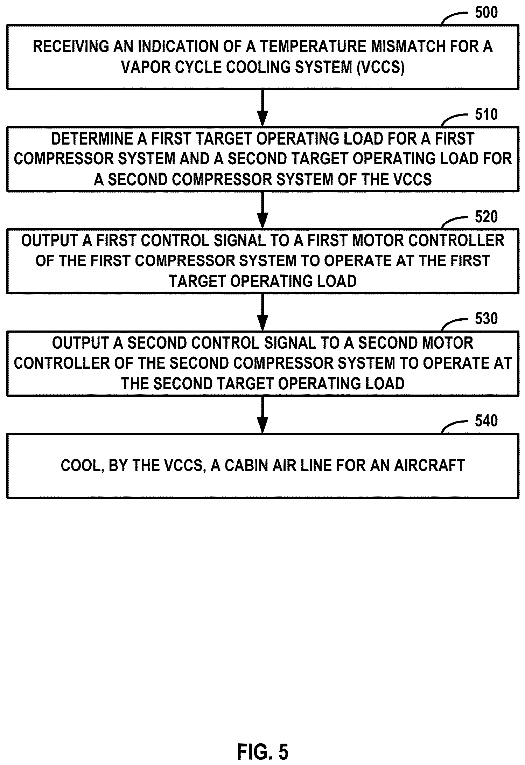

FIG. 5 is a flowchart of an example technique for cooling a thermal load of a vehicle. The techniques of FIG. 5 will be described with respect to VCCS 100 of FIG. 1. However, it will be understood that other systems may utilize the techniques of FIG. 5. For example, VCCS 200 of FIG. 2, VCCS 300 of FIG. 3.

The technique of FIG. 5 may include receiving an indication of a temperature mismatch for a vapor cycle cooling system (500). For example, cooling demands of VCCS 100 may include maintaining one or more temperature setpoints of cabin air in the cabin of an aircraft. System controller 180 may be configured to receive an indication of a temperature mismatch for VCCS 100. For example, the temperature of the cabin air may be outside of a range of setpoints for cabin air temperature stored in memory. System controller 180 may receive the one or more temperature setpoints, as well as a current temperature of the thermal load to be cooled (e.g., cabin air in the cabin of the aircraft). In some examples, system controller 180 may receive the one or more temperature setpoints from a database in memory of VCCS 100 or system controller 180. In some examples, system controller 180 may receive the one or more temperature setpoints from a control panel in the cabin of the aircraft with which system controller 180 is in communication.

System controller 180 may be configured to receive an indication of a temperature mismatch for VCCS 100. For example, system controller 180 may receive a temperature measurement of cabin air temperature and the one or more setpoints, and determine that the cabin air temperature is not within a range defined by the setpoints. For example, system controller 180 may receive one or more setpoints indicating a desired temperature range of cabin air in the aircraft between 20 degrees Celsius (68 degrees Fahrenheit) and 22.2 degrees Celsius (72 degrees Fahrenheit). System controller 180 may also receive a temperature measurement (e.g., a signal from a temperature sensor or other device in communication with system controller 180 indicative of a temperature) of 23.9 degrees Celsius (75 degrees Fahrenheit). System controller 180 may determine that 23.9 degrees Celsius (75 degrees Fahrenheit) is outside the range of 20-22.2 degrees Celsius (68-72 degrees Fahrenheit) and determine that there is a temperature mismatch. In some examples, system controller 180 may determine the temperature mismatch based on a temperature measurement exceeding a setpoint threshold. In some examples, the temperature mismatch may indicate the temperature of any portion of the aircraft exceeds a range or threshold. For example, the temperature of air in the first class portion of the cabin may exceed a range or threshold. In some examples, the temperature mismatch may indicate that the temperature of one or more electronics of the vehicle exceeds a range or threshold.

The technique may further include determining a first target operating load for a first compressor system and a second target operating load for a second compressor system of the VCCS (510). System controller 180 may determine a target operating load for VCCS 100 such that the cooling demands of the setpoints are met. In some examples, system controller 180 may determine target operating loads proportionally to the degree of mismatch between the thermal load temperature and the setpoints. For example, system controller 180 may determine a larger target operating load of VCCS 100 when the cabin air temperature greatly exceeds a setpoint, and may determine a lower target operating load for VCCS 100 when the cabin air only marginally exceeds a setpoint.

For example, system controller 180 may determine that the components of VCCS 100 may operate to provide a large amount of cooling (e.g., operate at a high percentage of the max load capacities of compressor systems 110, 120) when the cabin air temperature is significantly higher than the setpoint temperature. For example, system controller 180 may determine that compressor systems 110, 120 may operate at 80% of the load capacity of compressor systems 110, 120, to satisfy the cooling needs of the aircraft. In some examples, system controller 180 may determine that the components of VCCS 100 may operate to provide a small amount of cooling (e.g., operate at a low percentage of the max load capacities of compressor systems 120, 120) when the cabin air temperature is marginally higher than the setpoint temperature. For example, system controller 180 may determine that components of VCCS 100 may operate at 40% of the load capacity of compressor systems 110, 120, to satisfy the cooling needs of the aircraft.

Relationships between a desired amount of cooling and target operating parameters of VCCS 100 may be stored in reference databases in memory of system controller 180. For example, for a given amount that a current cabin air temperature exceeds a setpoint, reference databases may store instructions for operating parameters of VCCS 100 to return the cabin air temperature to a value within the setpoint range or beneath a setpoint threshold.

Although described with reference to cabin air of an aircraft, system controller 180 may control temperature measurements, ranges, setpoints, and thresholds for any and all portions of the vehicle. For example, system controller 180 may be configured to receive an indication of a temperature mismatch for cockpit air, first class air, storage air, or any other temperature controlled portion of the vehicle. In some examples, system controller 180 may be configured to receive an indication of a temperature mismatch for avionics or other electronics of the vehicle.

To determine the target operating load of VCCS 100, system controller 180 may determine a first target operating load for first compressor system 110 and a second target operating load for second compressor system 120. In some examples, system controller 180 may determine that compressor systems 110, 120 will operate at the same target operating loads. In some examples, system controller 180 may determine that compressor systems 110, 120 will operate at different operating loads. In some examples, system controller 180 may determine that only one compressor system of compressor systems 110, 120 is needed to satisfy the cooling demands of the aircraft.

In order to determine the target operating loads of first and second compressor systems 110, 120, system controller 180 may be configured to determine a combination of target operating loads of compressor systems 110, 120 that allow VCCS 100 to operate at the highest possible efficiency given a desired amount of cooling. As discussed above with reference to FIG. 1, a compressor system may operate at the highest efficiency when operating at a certain percentage of the compressor systems max load capacity, e.g., 80%. System controller 180 may determine the target operating loads of compressor systems 110, 120 such that the target operating loads are as close as possible to the percentage of the maximum load capacity that allow compressor systems 110, 120 to operate at max efficiency.

For example, second compressor system 120 may have a maximum load capacity of 50% of the maximum load capacity of first compressor system 110, the maximum efficiency of compressor systems 110, 120 may be achieved when operating at 80% of their max load capacity, and system controller 180 may determine that a target operating load of VCCS 100 is 80% of the maximum target operating load of VCCS 100. System controller 180 may determine that a first target operating load for first compressor system 110 is 80% of the max load capacity of first compressor system 110, and that a second target operating load for second compressor system 120 is 80% of the max load capacity of second compressor system 120 (rather than, e.g., a first target operating load of 90% of the max load capacity of first compressor system 110 and a second target operating load of 60% of the max load capacity of second compressor system 120, which would still achieve 80% of the load capacity of VCCS 100 but with less efficiency).

In some examples, second compressor system 120 may have a maximum load capacity of 50% of the maximum load capacity of first compressor system 110, the maximum efficiency of compressor systems 110, 120 may be achieved when operating at 80% of their max load capacity, and system controller 180 may determine that a target operating load of VCCS 100 is 26.66% of the maximum target operating load of VCCS 100. System controller 180 may determine that a first target operating load for first compressor system 110 is 0% of the max load capacity of first compressor system 110 (e.g., first compressor system 110 should idle), and that a second target operating load for second compressor system 120 is 80% of the max load capacity of second compressor system 120 (rather than, e.g., a first target operating load of 40% of the max load capacity of first compressor system 110 and a second target operating load of 0% of the max load capacity of second compressor system 120, which would still achieve 26.66% of the load capacity of VCCS 100, but with less efficiency).

The technique may further include outputting a first control signal to a first motor controller of the first compressor system to operate at the first target operating load (520) and outputting a second control signal to a second motor controller of the second compressor system to operate at the second target operating load (530). System controller 180 may be configured to send control signals to one or more components of VCCS 100 to reduce the mismatch to within the setpoint range or to satisfy a setpoint threshold. For example, system controller 180 may output control signals to one or more of first expansion device 104, second expansion device 162, first motor controller 115, and second motor controller 125.

In some examples, system controller 180 may output control signals to compressor systems 110, 120 to operate at the same target operating loads. In some examples, system controller 180 may output control signals to compressor systems 110, 120 to operate at different operating loads. In some examples, system controller 180 may determine that only one compressor system of compressor systems 110, 120 is needed, and may output a control signal to one of the compressor systems to idle. In some examples, second compressor system 120 has a max load capacity that is a fraction of the max load capacity of first compressor system 110, and the second target operating load may be a fraction of the first target operating load that is lower than the first target operating load.

For example, system controller 180 may output control signals to motor controllers 115, 125 to operate at 80% of the load capacity of compressor systems 110, 120, and system controller 180 may output control signals to expansion devices 104, 162 to operate consistent with the operating capacity of compressor systems 110, 120 to control refrigerant flow to different parts of VCCS 100.

The technique may further include cooling, by VCCS 100, a thermal load (e.g., a cabin air supply line) for an aircraft. VCCS 100 may be configured to cool thermal load 164 (540). For example, thermal load 164 may represent a cabin air line filled with air to be cooled to provide cool air to a cabin of an aircraft. The cabin of an aircraft may be configured to house people, cargo, and the like. The cabin may be fluidically coupled to the cabin air supply line.

VCCS 100 may be configured to cool thermal load 164 (e.g., cabin air line) through a vapor compression cycle. For example, VCCS 100 may include refrigerant that undergoes a vapor cycle as the refrigerant progresses through VCCS 100 in order to cool thermal load 164. For example, first compressor system 110 and second compressor system 120 may be configured to pressurize the refrigerant, causing the refrigerant to travel through VCCS 100. Condenser 102 may be configured to cool the refrigerant as it travels through VCCS 100. Expansion devices 104, 162 may be configured to control a flow rate of refrigerant through VCCS 100. Flash heat exchanger 106 may be configured to separate vapor refrigerant from liquid refrigerant to increase an efficiency of VCCS 100. Evaporator 108 may be configured to cool thermal load 164, e.g., cool a cabin air line to supply an aircraft cabin with cool air, through heat transfer from thermal load 164 to the refrigerant flowing through evaporator 108.

The techniques described in this disclosure may be implemented, at least in part, in hardware, software, firmware, or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of this disclosure.

Such hardware, software, and firmware may be implemented within the same device or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

The techniques described in this disclosure may also be embodied or encoded in an article of manufacture including a computer-readable storage medium encoded with instructions. Instructions embedded or encoded in an article of manufacture including a computer-readable storage medium, may cause one or more programmable processors, or other processors, to implement one or more of the techniques described herein, such as when instructions included or encoded in the computer-readable storage medium are executed by the one or more processors. Computer readable storage media may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

In some examples, a computer-readable storage medium may include a non-transitory medium. The term "non-transitory" may indicate that the storage medium is not embodied in a carrier wave or a propagated signal. In certain examples, a non-transitory storage medium may store data that can, over time, change (e.g., in RAM or cache).

## Claims

1. A vapor cycle cooling system (100, 200, 300), comprising:
a first compressor system (110, 210) comprising a first motor (114, 214), a first motor controller (115, 215), and a first compressor (112A, 212A) in series with a second compressor (112B, 212B);
a second compressor system (120, 220), in parallel to the first compressor system (110, 210), the second compressor system (120, 220) comprising a second motor (124, 224), a second motor controller (125, 225), and a third compressor (122A, 222A) in series with a fourth compressor (122B, 222B);
a condenser (102, 202, 302) fluidically coupled to the first and second compressor systems;
a filter drier (138, 238, 338), in series with, and fluidically coupled to the condenser (102, 202, 302);
a first expansion device (104, 204) in series with, and fluidically coupled to, a flash heat exchanger (106, 206), the flash heat exchanger (106, 206) fluidically coupled to a second expansion device (162, 262, 362), the second expansion device (162, 262, 362) fluidically coupled to a first evaporator (108, 266, 366), the first evaporator (108, 266, 366) fluidically coupled to the first and second compressor systems;
a system controller (180, 280, 380, 480) electrically coupled to the first and second motor controllers; and
a motor and motor controller cooling loop fluidically coupled to the filter drier (138, 238, 338) and the first and second motors, wherein the vapor cycle cooling system is configured to cool one or more thermal loads (164, 264, 274) for a vehicle.

2. The vapor cycle cooling system (100, 200, 300) of claim 1, wherein the flash heat exchanger (106, 206) is fluidically coupled to the first and second compressor systems.

3. The vapor cycle cooling system (100, 200, 300) of claim 2,
wherein the first compressor system (110, 210) further comprises a first interstage line (113) between the first compressor (112A, 212A) and the second compressor (112B, 212B),
wherein the second compressor system (120, 220) further comprises a second interstage line (123) between the third compressor (122A, 222A) and the fourth compressor (122B, 222B), and
wherein the flash heat exchanger (106, 206) is fluidically coupled to both the first interstage line (113) and the second interstage line (123).

4. The vapor cycle cooling system (100, 200, 300) of any of claims 1 to 3, wherein the flash heat exchanger (106, 206) is in series with, and fluidically coupled to, the filter drier (138, 238, 338).

5. The vapor cycle cooling system (100, 200, 300) of any of claims 1 to 4, wherein the one or more thermal loads (164, 264, 274) comprise one or more of cabin air for the vehicle, cockpit air for the vehicle, avionics of the vehicle, and other electronic equipment of the vehicle.

6. The vapor cycle cooling system (200, 300) of any of claims 1 to 5, further comprising a third expansion device (272, 372) in parallel with the second expansion device (262, 362), the third expansion device (272, 372) fluidically coupled to a second evaporator (276, 376) in parallel with the first evaporator (266, 366), the system controller (280, 380, 480) further electrically coupled to the second expansion device (262, 362) and the third expansion device (272, 372),
wherein the first evaporator (266, 366) is configured to cool a first air line for a first portion of the vehicle,
wherein the second evaporator (276, 376) is configured to cool a second air line for a second portion of the vehicle, and
wherein each of the first and second evaporators are fluidically coupled to both the first and third compressors.

7. The vapor cycle cooling system (100, 200, 300) of any of claims 1 to 6, wherein the system controller (180, 280, 380, 480) comprises processing circuitry (484) configured to:
receive, by the system controller (180, 280, 380, 480), an indication of a temperature mismatch for the vapor cycle cooling system, VCCS, (500);
determine, by the system controller (180, 280, 380, 480), a first target operating load for the first compressor system (110, 210) and a second target operating load for the second compressor system (120, 220);
output, by the system controller (180, 280, 380, 480), a first control signal to the first motor controller (115, 215) instructing the first motor controller (115, 215) to operate the first compressor system (110, 210) at the first target operating load; and
output, by the system controller (180, 280, 380, 480), a second control signal to the second motor controller (125, 225) instructing the second motor controller (125, 225) to operate the second compressor system (120, 220) at the second target operating load.

8. The vapor cycle cooling system (100, 200, 300) of claim 7, wherein to determine the first and second target operating loads, the processing circuitry (484) is further configured to maximize an efficiency of the first and second compressor systems.

9. The vapor cycle cooling system (100, 200, 300) of claim 7 or 8, wherein the second target operating load is a fraction of the first target operating load, and the second target operating load is lower than the first target operating load.

10. A method comprising:
cooling, by a vapor cycle cooling system (500), one or more thermal loads (164, 264, 274) for a vehicle, wherein the vapor cycle cooling system (100, 200, 300) comprises:
a first compressor system (110, 210) comprising a first motor (114, 214), a first motor controller (115, 215), and a first compressor (112A, 212A) in series with a second compressor (112B, 212B);
a second compressor system (120, 220), in parallel to the first compressor system (110, 210), the second compressor system (120, 220) comprising a second motor (124, 224), a second motor controller (125, 225), and a third compressor (122A, 222A) in series with a fourth compressor (122B, 222B);
a condenser (102, 202, 302) fluidically coupled to the first and second compressor systems;
a filter drier (138, 238, 338), in series with, and fluidically coupled to the condenser (102, 202, 302);
a first expansion device (104, 204) in series with, and fluidically coupled to, a flash heat exchanger (106, 206), the flash heat exchanger (106, 206) fluidically coupled to a second expansion device (162, 262, 362), the second expansion device (162, 262, 362) fluidically coupled to a first evaporator (108, 266, 366), the first evaporator (108, 266, 366) fluidically coupled to the first and second compressor systems;
a system controller (180, 280, 380, 480) electrically coupled to the first and second motor controllers; and
a motor and motor controller cooling loop fluidically coupled to the filter drier (138, 238, 338) and the first and second motors.

11. The method of claim 10,
wherein the first compressor system (110, 210) further comprises a first interstage line (113) between the first compressor (112A, 212A) and the second compressor (112B, 212B),
wherein the second compressor system (120, 220) further comprises a second interstage line (123) between the third compressor (122A, 222A) and the fourth compressor (122B, 222B), and
wherein the flash heat exchanger (106, 206) is fluidically coupled to both the first interstage line (113) and the second interstage line (123).

12. The method of claim 10 or 11, wherein the flash heat exchanger (106, 206) is in series with, and fluidically coupled to, the filter drier (138, 238, 338).

13. The method of any of claims 10 to 12, wherein the vapor cycle cooling system (200, 300) further comprises a third expansion device (272, 372) in parallel with the second expansion device (262, 362), the third expansion device (272, 372) fluidically coupled to a second evaporator (276, 376) in parallel with the first evaporator (266, 366), the system controller (280, 380, 480) further electrically coupled to the second expansion device (262, 362) and the third expansion device (272, 372), wherein the method further comprises:
cooling, by the first evaporator (266, 366), a first air line for a first portion of the vehicle; and
cooling, by the second evaporator (276, 376), a second air line for a second portion of the vehicle.

14. The method of any of claims 10 to 13, further comprising:
receiving, by the system controller (180, 280, 380, 480), an indication of a temperature mismatch for the vapor cycle cooling system, VCCS, (500);
determining, by the system controller (180, 280, 380, 480), a first target operating load for the first compressor system (110, 210) and a second target operating load for the second compressor system (120, 220), wherein determining the first and second target operating loads comprises maximizing an efficiency of the first and second compressor systems;
outputting, by the system controller (180, 280, 380, 480), a first control signal to the first motor controller (115, 215) instructing the first motor controller (115, 215) to operate the first compressor system (110, 210) at the first target operating load; and
outputting, by the system controller (180, 280, 380, 480), a second control signal to the second motor controller (125, 225) instructing the second motor controller (125, 225) to operate the second compressor system (120, 220) at the second target operating load.

15. The method of any of claims 10 to 14, wherein the second target operating load is a fraction of the first target operating load, and the second target operating load is lower than the first target operating load.

## Patentansprüche

1. Dampfzykluskühlsystem (100, 200, 300), umfassend:
ein erstes Kompressorsystem (110, 210), umfassend einen ersten Motor (114, 214), eine erste Motorsteuerung (115, 215) und einen in Reihe mit einem zweiten Kompressor (112B, 212B) angeordneten ersten Kompressor (112A, 212A);
ein parallel zu dem ersten Kompressorsystem (110, 210) angeordnetes zweites Kompressorsystem (120, 220), das zweite Kompressorsystem (120, 220) umfassend einen zweiten Motor (124, 224), eine zweite Motorsteuerung (125, 225) und einen in Reihe mit einem vierten Kompressor (122B, 222B) angeordneten dritten Kompressor (122A, 222A);
einen Kondensator (102, 202, 302) der mit dem ersten und dem zweiten Kompressorsystem fluidisch gekoppelt ist;
einen Filtertrockner (138, 238, 338), der in Reihe mit dem Kondensator (102, 202, 302) angeordnet und fluidisch mit diesem gekoppelt ist;
eine erste Ausdehnungsvorrichtung (104, 204), die in Reihe mit einem Flash-Wärmetauscher (106, 206) angeordnet und fluidisch mit diesem gekoppelt ist, wobei der Flash-Wärmetauscher (106, 206) fluidisch mit einer zweiten Ausdehnungsvorrichtung (162, 262, 362) gekoppelt ist, wobei die zweite Ausdehnungsvorrichtung (162, 262, 362) fluidisch mit einem ersten Verdampfer (108, 266, 366) gekoppelt ist, wobei der erste Verdampfer (108, 266, 366) mit dem ersten und dem zweiten Kompressorsystem fluidisch gekoppelt ist;
eine Systemsteuerung (180, 280, 380, 480), die mit der ersten und der zweiten Motorsteuerung elektrisch gekoppelt ist; und
einen Motor und eine Motorsteuerungskühlschleife, die fluidisch mit dem Filtertrockner (138, 238, 338) und dem ersten und dem zweiten Motor gekoppelt ist, wobei das Dampfzykluskühlsystem dazu konfiguriert ist, eine oder mehrere thermische Lasten (164, 264, 274) für ein Fahrzeug zu kühlen.

2. Dampfzykluskühlsystem (100, 200, 300) nach Anspruch 1, wobei der Flash-Wärmetauscher (106, 206) fluidisch mit dem ersten und dem zweiten Kompressorsystem gekoppelt ist.

3. Dampfzykluskühlsystem (100, 200, 300) nach Anspruch 2,
wobei das erste Kompressorsystem (110, 210), ferner eine erste Zwischenstufenleitung (113) zwischen dem ersten Kompressor (112A, 212A) und dem zweiten Kompressor (112B, 212B) umfasst,
wobei das zweite Kompressorsystem (120, 220), ferner eine zweite Zwischenstufenleitung (123) zwischen dem dritten Kompressor (122A, 222A) und dem vierten Kompressor (122B, 222B) umfasst, und
wobei der Flash-Wärmetauscher (106, 206) fluidisch mit sowohl der ersten Zwischenstufenleitung (113) als auch mit der zweiten Zwischenstufenleitung (123) gekoppelt ist.

4. Dampfzykluskühlsystem (100, 200, 300) nach einem der Ansprüche 1 bis 3, wobei der Flash-Wärmetauscher (106, 206) in Reihe mit dem Filtertrockner (138, 238, 338) angeordnet und fluidisch mit diesem gekoppelt ist.

5. Dampfzykluskühlsystem (100, 200, 300) nach einem der Ansprüche 1 bis 4, wobei die eine oder die mehreren thermischen Lasten (164, 264, 274) eines oder mehrere aus Kabinenluft für das Fahrzeug, Cockpitluft für das Fahrzeug, Luftfahrtelektronik des Fahrzeugs und sonstige elektronische Ausrüstung des Fahrzeugs umfasst.

6. Dampfzykluskühlsystem (200, 300) nach einem der Ansprüche 1 bis 5, ferner umfassend eine parallel zu der zweiten Ausdehnungsvorrichtung (262, 362) angeordnete dritte Ausdehnungsvorrichtung (272, 372), wobei die dritte Ausdehnungsvorrichtung (272, 372) fluidisch mit einem parallel zu dem ersten Verdampfer (266, 366) angeordneten zweiten Verdampfer (276, 376) gekoppelt ist, wobei die Systemsteuerung (280, 380, 480) ferner elektrisch mit der zweiten Ausdehnungsvorrichtung (262, 362) und der dritten Ausdehnungsvorrichtung (272, 372) gekoppelt ist,
wobei der erste Verdampfer (266, 366) dazu konfiguriert ist, eine erste Luftleitung für einen ersten Teil des Fahrzeugs zu kühlen,
wobei der zweite Verdampfer (276, 376) dazu konfiguriert ist, eine zweite Luftleitung für einen zweiten Teil des Fahrzeugs zu kühlen, und
wobei jeder von dem ersten und dem zweiten Verdampfer fluidisch mit sowohl dem ersten als auch dem dritten Kompressor gekoppelt ist.

7. Dampfzykluskühlsystem (100, 200, 300) nach einem der Ansprüche 1 bis 6, wobei die Systemsteuerung (180, 280, 380, 480) eine Verarbeitungsschaltung (484) umfasst, die dazu konfiguriert ist:
durch die Systemsteuerung (180, 280, 380, 480), eine Angabe einer Temperaturabweichung für das Dampfzykluskühlsystem, VCCS, (500) zu empfangen;
durch die Systemsteuerung (180, 280, 380, 480) eine erste Zielbetriebslast für das erste Kompressorsystem (110, 210) und eine zweite Zielbetriebslast für das zweite Kompressorsystem (120, 220) zu bestimmen;
durch die Systemsteuerung (180, 280, 380, 480) ein erstes Steuersignal an die erste Motorsteuerung (115, 215) auszugeben, das die erste Motorsteuerung (115, 215) anweist, das erste Kompressorsystem (110, 210) mit der ersten Zielbetriebslast zu betreiben; und
durch die Systemsteuerung (180, 280, 380, 480) ein zweites Steuersignal an die zweite Motorsteuerung (125, 225) auszugeben, das die zweite Motorsteuerung (125, 225) anweist, das zweite Kompressorsystem (120, 220) mit der zweiten Zielbetriebslast zu betreiben.

8. Dampfzykluskühlsystem (100, 200, 300) nach Anspruch 7, wobei, um die erste und die zweite Zielbetriebslast zu bestimmen, die Verarbeitungsschaltung (484) ferner dazu konfiguriert ist, eine Effizienz des ersten und des zweiten Kompressorsystems zu maximieren.

9. Dampfzykluskühlsystem (100, 200, 300) nach Anspruch 7 oder 8, wobei die zweite Zielbetriebslast ein Bruchteil der ersten Zielbetriebslast ist, und die zweite Zielbetriebslast geringer ist als die erste Zielbetriebslast.

10. Verfahren, umfassend:
Kühlen, durch ein Dampfzykluskühlsystem (500), von einer oder mehreren thermischen Lasten (164, 264, 274) für ein Fahrzeug, wobei das Dampfzykluskühlsystem (100, 200, 300) Folgendes umfasst:
ein erstes Kompressorsystem (110, 210), umfassend einen ersten Motor (114, 214), eine erste Motorsteuerung (115, 215) und einen in Reihe mit einem zweiten Kompressor (112B, 212B) angeordneten ersten Kompressor (112A, 212A);
ein parallel zu dem ersten Kompressorsystem (110, 210) angeordnetes zweites Kompressorsystem (120, 220), das zweite Kompressorsystem (120, 220) umfassend einen zweiten Motor (124, 224), eine zweite Motorsteuerung (125, 225) und einen in Reihe mit einem vierten Kompressor (122B, 222B) angeordneten dritten Kompressor (122A, 222A);
einen Kondensator (102, 202, 302) der mit dem ersten und dem zweiten Kompressorsystem fluidisch gekoppelt ist;
einen Filtertrockner (138, 238, 338), der in Reihe mit dem Kondensator (102, 202, 302) angeordnet und fluidisch mit diesem gekoppelt ist;
eine erste Ausdehnungsvorrichtung (104, 204), die in Reihe mit einem Flash-Wärmetauscher (106, 206) angeordnet und fluidisch mit diesem gekoppelt ist, wobei der Flash-Wärmetauscher (106, 206) fluidisch mit einer zweiten Ausdehnungsvorrichtung (162, 262, 362) gekoppelt ist, wobei die zweite Ausdehnungsvorrichtung (162, 262, 362) fluidisch mit einem ersten Verdampfer (108, 266, 366) gekoppelt ist, wobei der erste Verdampfer (108, 266, 366) mit dem ersten und dem zweiten Kompressorsystem fluidisch gekoppelt ist;
eine Systemsteuerung (180, 280, 380, 480), die mit der ersten und der zweiten Motorsteuerung elektrisch gekoppelt ist; und
einen Motor und eine Motorsteuerungskühlschleife, die fluidisch mit dem Filtertrockner (138, 238, 338) und dem ersten und dem zweiten Motor gekoppelt ist.

11. Verfahren nach Anspruch 10,
wobei das erste Kompressorsystem (110, 210), ferner eine erste Zwischenstufenleitung (113) zwischen dem ersten Kompressor (112A, 212A) und dem zweiten Kompressor (112B, 212B) umfasst,
wobei das zweite Kompressorsystem (120, 220), ferner eine zweite Zwischenstufenleitung (123) zwischen dem dritten Kompressor (122A, 222A) und dem vierten Kompressor (122B, 222B) umfasst, und
wobei der Flash-Wärmetauscher (106, 206) fluidisch mit sowohl der ersten Zwischenstufenleitung (113) als auch mit der zweiten Zwischenstufenleitung (123) gekoppelt ist.

12. Verfahren nach Anspruch 10, oder 11, wobei der Flash-Wärmetauscher (106, 206) in Reihe mit dem Filtertrockner (138, 238, 338) angeordnet und fluidisch mit diesem gekoppelt ist.

13. Verfahren nach einem der Ansprüche 10 bis 12, wobei das Dampfzykluskühlsystem (200, 300) ferner eine parallel zu der zweiten Ausdehnungsvorrichtung (262, 362) angeordnete dritte Ausdehnungsvorrichtung (272, 372) umfasst, wobei die dritte Ausdehnungsvorrichtung (272, 372) fluidisch mit einem parallel zu dem ersten Verdampfer (266, 366) angeordneten zweiten Verdampfer (276, 376) gekoppelt ist, wobei die Systemsteuerung (280, 380, 480) ferner elektrisch mit der zweiten Ausdehnungsvorrichtung (262, 362) und der dritten Ausdehnungsvorrichtung (272, 372) gekoppelt ist, wobei das Verfahren ferner Folgendes umfasst:
Kühlen, durch den ersten Verdampfer (266, 366), einer ersten Luftleitung für einen ersten Teil des Fahrzeugs; und
Kühlen, durch den zweiten Verdampfer (276, 376), einer zweiten Luftleitung für einen zweiten Teil des Fahrzeugs.

14. Verfahren nach einem der Ansprüche 10 bis 13, ferner umfassend:
Empfangen, durch die Systemsteuerung (180, 280, 380, 480), einer Angabe einer Temperaturabweichung für das Dampfzykluskühlsystem, VCCS, (500);
Bestimmen, durch die Systemsteuerung (180, 280, 380, 480), einer ersten Zielbetriebslast für das erste Kompressorsystem (110, 210) und einer zweiten Zielbetriebslast für das zweite Kompressorsystem (120, 220), wobei das Bestimmen der ersten und der zweiten Zielbetriebslast das Maximieren einer Effizienz des ersten und des zweiten Kompressorsystems umfasst;
Ausgeben, durch die Systemsteuerung (180, 280, 380, 480), eines ersten Steuersignals an die erste Motorsteuerung (115, 215), das die erste Motorsteuerung (115, 215) anweist, das erste Kompressorsystem (110, 210) mit der ersten Zielbetriebslast zu betreiben; und
Ausgeben, durch die Systemsteuerung (180, 280, 380, 480), eines zweiten Steuersignals an die zweite Motorsteuerung (125, 225), das die zweite Motorsteuerung (125, 225) anweist, das zweite Kompressorsystem (120, 220) mit der zweiten Zielbetriebslast zu betreiben.

15. Verfahren nach einem der Ansprüche 10 bis 14, wobei die zweite Zielbetriebslast ein Bruchteil der ersten Zielbetriebslast ist, und die zweite Zielbetriebslast geringer ist als die erste Zielbetriebslast.

## Revendications

1. Système de refroidissement à cycle vapeur (100, 200, 300), comprenant :
un premier système de compression (110, 210) comprenant un premier moteur (114, 214), un premier dispositif de commande de moteur (115, 215), et un premier compresseur (112A, 212A) en série avec un deuxième compresseur (112B, 212B) ;
un deuxième système de compression (120, 220), en parallèle au premier système de compression (110, 210), le deuxième système de compression (120, 220) comprenant un deuxième moteur (124, 224), un deuxième dispositif de commande de moteur (125, 225), et un troisième compresseur (122A, 222A) en série avec un quatrième compresseur (122B, 222B) ;
un condenseur (102, 202, 302) raccordé fluidiquement aux premier et deuxième systèmes de compression ;
un filtre déshydrateur (138, 238, 338), en série avec le condenseur (102, 202, 302) et raccordé fluidiquement à celui-ci ;
un premier dispositif de détente (104, 204) en série avec un échangeur de chaleur à détente partielle (106, 206) et raccordé fluidiquement à celui-ci, l'échangeur de chaleur à détente partielle (106, 206) étant raccordé fluidiquement à un deuxième dispositif de détente (162, 262, 362), le deuxième dispositif de détente (162, 262, 362) étant raccordé fluidiquement à un premier évaporateur (108, 266, 366), le premier évaporateur (108, 266, 366) étant raccordé fluidiquement aux premier et deuxième systèmes de compression ;
un dispositif de commande du système (180, 280, 380, 480) raccordé électriquement aux premier et deuxième dispositifs de commande de moteur ; et
une boucle de refroidissement des moteurs et dispositifs de commande de moteurs, raccordée fluidiquement au filtre déshydrateur (138, 238, 338) ainsi qu'aux premier et deuxième moteurs, dans laquelle le système de refroidissement à cycle vapeur est configuré pour refroidir une ou plusieurs charges thermiques (164, 264, 274) pour un véhicule.

2. Système de refroidissement à cycle vapeur (100, 200, 300) de la revendication 1, dans lequel l'échangeur de chaleur à détente partielle (106, 206) est raccordé fluidiquement aux premier et deuxième systèmes de compression.

3. Système de refroidissement à cycle vapeur (100, 200, 300) de la revendication 2,
dans lequel le premier système de compression (110, 210) comprend en outre une première ligne intermédiaire (113) entre le premier compresseur (112A, 212A) et le deuxième compresseur (112B, 212B),
dans lequel le deuxième système de compression (120, 220) comprend en outre une deuxième ligne intermédiaire (123) entre le troisième compresseur (122A, 222A) et le quatrième compresseur (122B, 222B), et
dans lequel l'échangeur de chaleur à détente partielle (106, 206) est raccordé fluidiquement à la fois à la première ligne intermédiaire (113) et à la deuxième ligne intermédiaire (123).

4. Système de refroidissement à cycle vapeur (100, 200, 300) de l'une quelconque des revendications 1 à 3, dans lequel l'échangeur de chaleur à détente partielle (106, 206) est en série avec le filtre déshydrateur (138, 238, 338), et raccordé fluidiquement à celui-ci.

5. Système de refroidissement à cycle vapeur (100, 200, 300) de l'une quelconque des revendications 1 à 4, dans lequel lesdites une ou plusieurs charges thermiques (164, 264, 274) comprennent l'un ou plusieurs parmi de l'air de cabine pour le véhicule, de l'air de poste de pilotage pour le véhicule, l'avionique du véhicule, et d'autres équipements électroniques du véhicule.

6. Système de refroidissement à cycle vapeur (200, 300) de l'une quelconque des revendications 1 à 5, comprenant en outre un troisième dispositif de détente (272, 372) en parallèle avec le deuxième dispositif de détente (262, 362), le troisième dispositif de détente (272, 372) étant raccordé fluidiquement à un deuxième évaporateur (276, 376) en parallèle avec le premier évaporateur (266, 366), le dispositif de commande du système (280, 380, 480) étant en outre raccordé électriquement au deuxième dispositif de détente (262, 362) et au troisième dispositif de détente (272, 372),
dans lequel le premier évaporateur (266, 366) est configuré pour refroidir une première conduite d'air destinée à une première partie du véhicule,
dans lequel le deuxième évaporateur (276, 376) est configuré pour refroidir une deuxième conduite d'air destinée à une deuxième partie du véhicule, et
dans lequel chacun des premier et deuxième évaporateurs est raccordé fluidiquement à la fois au premier et au troisième compresseur.

7. Système de refroidissement à cycle vapeur (100, 200, 300) de l'une quelconque des revendications 1 à 6, dans lequel le dispositif de commande du système (180, 280, 380, 480) comprend une circuiterie de traitement (484) configurée pour :
recevoir, par le dispositif de commande du système (180, 280, 380, 480), une indication d'un déséquilibre thermique pour le système de refroidissement à cycle vapeur, VCCS, (500) ;
déterminer, par le dispositif de commande du système (180, 280, 380, 480), une première charge de fonctionnement cible pour le premier système de compression (110, 210) et une deuxième charge de fonctionnement cible pour le deuxième système de compression (120, 220) ;
émettre, par le dispositif de commande du système (180, 280, 380, 480), un premier signal de commande au premier dispositif de commande de moteur (115, 215) demandant au premier dispositif de commande de moteur (115, 215) de faire fonctionner le premier système de compression (110, 210) à la première charge de fonctionnement cible ; et
émettre, par le dispositif de commande du système (180, 280, 380, 480), un deuxième signal de commande au deuxième dispositif de commande de moteur (125, 225) demandant au deuxième dispositif de commande de moteur (125, 225) de faire fonctionner le deuxième système de compression (120, 220) à la deuxième charge de fonctionnement cible.

8. Système de refroidissement à cycle vapeur (100, 200, 300) de la revendication 7, dans lequel, pour déterminer les première et deuxième charges de fonctionnement cibles, la circuiterie de traitement (484) est en outre configurée pour maximiser le rendement des premier et deuxième systèmes de compression.

9. Système de refroidissement à cycle vapeur (100, 200, 300) de la revendication 7 ou 8, dans lequel la deuxième charge de fonctionnement cible est une fraction de la première charge de fonctionnement cible, et dans lequel la deuxième charge de fonctionnement cible est inférieure à la première charge de fonctionnement cible.

10. Procédé comprenant :
le refroidissement, au moyen d'un système de refroidissement à cycle vapeur (500), d'une ou plusieurs charges thermiques (164, 264, 274) pour un véhicule, dans lequel le système de refroidissement à cycle vapeur (100, 200, 300) comprend :
un premier système de compression (110, 210) comprenant un premier moteur (114, 214), un premier dispositif de commande de moteur (115, 215), et un premier compresseur (112A, 212A) en série avec un deuxième compresseur (112B, 212B) ;
un deuxième système de compression (120, 220), en parallèle au premier système de compression (110, 210), le deuxième système de compression (120, 220) comprenant un deuxième moteur (124, 224), un deuxième dispositif de commande de moteur (125, 225), et un troisième compresseur (122A, 222A) en série avec un quatrième compresseur (122B, 222B) ;
un condenseur (102, 202, 302) raccordé fluidiquement aux premier et deuxième systèmes de compression ;
un filtre déshydrateur (138, 238, 338), en série avec le condenseur (102, 202, 302) et raccordé fluidiquement à celui-ci ;
un premier dispositif de détente (104, 204) en série avec un échangeur de chaleur à détente partielle (106, 206) et raccordé fluidiquement à celui-ci, l'échangeur de chaleur à détente partielle (106, 206) étant raccordé fluidiquement à un deuxième dispositif de détente (162, 262, 362), le deuxième dispositif de détente (162, 262, 362) étant raccordé fluidiquement à un premier évaporateur (108, 266, 366), le premier évaporateur (108, 266, 366) étant raccordé fluidiquement aux premier et deuxième systèmes de compression ;
un dispositif de commande du système (180, 280, 380, 480) raccordé électriquement aux premier et deuxième dispositifs de commande de moteur ; et
une boucle de refroidissement des moteurs et dispositifs de commande de moteurs raccordée fluidiquement au filtre déshydrateur (138, 238, 338) ainsi qu'aux premier et deuxième moteurs.

11. Procédé de la revendication 10,
dans lequel le premier système de compression (110, 210) comprend en outre une première ligne intermédiaire (113) entre le premier compresseur (112A, 212A) et le deuxième compresseur (112B, 212B),
dans lequel le deuxième système de compression (120, 220) comprend en outre une deuxième ligne intermédiaire (123) entre le troisième compresseur (122A, 222A) et le quatrième compresseur (122B, 222B), et
dans lequel l'échangeur de chaleur à détente partielle (106, 206) est raccordé fluidiquement à la fois à la première ligne intermédiaire (113) et à la deuxième ligne intermédiaire (123).

12. Procédé de la revendication 10 ou 11, dans lequel l'échangeur de chaleur à détente partielle (106, 206) est en série avec le filtre déshydrateur (138, 238, 338), et raccordé fluidiquement à celui-ci.

13. Procédé de l'une quelconque des revendications 10 à 12, dans lequel le système de refroidissement à cycle vapeur (200, 300) comprend en outre un troisième dispositif de détente (272, 372) en parallèle avec le deuxième dispositif de détente (262, 362), le troisième dispositif de détente (272, 372) étant raccordé fluidiquement à un deuxième évaporateur (276, 376) en parallèle avec le premier évaporateur (266, 366), le dispositif de commande du système (280, 380, 480) étant en outre raccordé électriquement au deuxième dispositif de détente (262, 362) et au troisième dispositif de détente (272, 372), dans lequel le procédé comprend en outre :
le refroidissement, par le premier évaporateur (266, 366), d'une première conduite d'air destinée à une première partie du véhicule ; et
le refroidissement, par le deuxième évaporateur (276, 376), d'une deuxième conduite d'air destinée à une deuxième partie du véhicule.

14. Procédé de l'une quelconque des revendications 10 à 13, comprenant en outre :
la réception, par le dispositif de commande du système (180, 280, 380, 480), d'une indication d'un déséquilibre thermique pour le système de refroidissement à cycle vapeur, VCCS, (500) ;
la détermination, par le dispositif de commande du système (180, 280, 380, 480), d'une première charge de fonctionnement cible pour le premier système de compression (110, 210) et d'une deuxième charge de fonctionnement cible pour le deuxième système de compression (120, 220), dans laquelle la détermination des première et deuxième charges de fonctionnement cibles comprend la maximisation du rendement des premier et deuxième systèmes de compression ;
l'émission, par le dispositif de commande du système (180, 280, 380, 480), d'un premier signal de commande au premier dispositif de commande de moteur (115, 215) demandant au premier dispositif de commande de moteur (115, 215) de faire fonctionner le premier système de compression (110, 210) à la première charge de fonctionnement cible ; et
l'émission, par le dispositif de commande du système (180, 280, 380, 480), d'un deuxième signal de commande au deuxième dispositif de commande de moteur (125, 225) demandant au deuxième dispositif de commande de moteur (125, 225) de faire fonctionner le deuxième système de compression (120, 220) à la deuxième charge de fonctionnement cible.

15. Procédé de l'une quelconque des revendications 10 à 14, dans lequel la deuxième charge de fonctionnement cible est une fraction de la première charge de fonctionnement cible, et dans lequel la deuxième charge de fonctionnement cible est inférieure à la première charge de fonctionnement cible.
